# EUROPÄISCHE PATENTSCHRIFT

(11) **EP 2 459 391 B1**
(45) Veröffentlichungstag und Bekanntmachung des Hinweises auf die Patenterteilung: **06.03.2013**
(21) Anmeldenummer: 09783120.0
(22) Anmeldetag: 17.09.2009
(51) Int. Cl.: B60B 21/02

(54) **KRAFTFAHRZEUGRAD SOWIE VERFAHREN ZUM HERSTELLEN EINES KRAFTFAHRZEUGRADES**
MOTOR VEHICLE WHEEL AND METHOD FOR PRODUCING A MOTOR VEHICLE WHEEL
ROUE DE VÉHICULE AUTOMOBILE, ET PROCÉDÉ DE PRODUCTION D'UNE ROUE DE VÉHICULE AUTOMOBILE

(43) Veröffentlichungstag der Anmeldung: 06.06.2012
(73) Patentinhaber: Otto Fuchs KG, 58540 Meinerzhagen (DE)
(72) Erfinder: SOMMERFELD, Bernd, 51688 Wipperfürth (DE)
(74) Vertreter: Haverkamp, Jens
(86) Internationale Anmeldenummer: PCT/EP2009/062053
(87) Internationale Veröffentlichungsnummer: WO 2011/032590

(56) Entgegenhaltungen:
- EP-A1- 0 807 539
- EP-A2- 1 522 427
- WO-A1-2005/005171
- DE-A1- 2 441 235
- FR-A1- 2 781 184
- US-A- 3 977 727
- US-A1- 2008 190 534

## Beschreibung

Die Erfindung betrifft ein Kraftfahrzeugrad mit einer ein Außenhorn, ein Innenhorn und ein die beiden Hörner verbindendes Felgenbett aufweisenden Felge zum Halten eines Reifens zwischen dem Außenhorn und dem Innenhorn, welches Felgenbett einen Tiefbettabschnitt ausweist, wobei der Tiefbettabschnitt oder zumindest ein Teil desselben benachbart zu dem dem Innenhorn zugeordneten Reifensitz angeordnet ist. Ferner betrifft die Erfindung ein Verfahren zum Herstellen eines solchen Kraftfahrzeugrades.

Kraftfahrzeugräder sind Ringkörper, deren Felgenbett im Wege eines Walzprozesses in Form gebracht werden können. Als Walzrohling kann hierzu ein Schmiedekörper dienen, der einen in radialer Richtung von der durch den vorangegangenen Schmiedeprozess ausgebildeten Schüssel abragenden umlaufenden Fortsatz - einen Walzfortsatz - aufweist. Dieser wird im Zuge des Walzprozesses über eine Widerlageroberfläche zum Herstellen der Felge des Rades ausgewalzt. Eine für einen solchen Walzprozess konzipierte Walzvorrichtung verfügt über ein rotatorisch angetriebenes Walzwerkzeug und eine gegenüber diesem ortsfeste Walzrolle, gegen welches das bewegliche Walzwerkzeug arbeitet, und zwar unter Zwischenschaltung des zu formenden Körpers. Damit stellt die Oberfläche des Walzwiderlagers eine formgebende Umformfläche dar. Das Ausformen der Felge eines Kraftfahrzeugrades als Ringkörper erfolgt ausgehend von dem Walzfortsatz und in Bezug auf die Orientierung des Rades von außen nach innen und somit in Richtung zu dem auszubildenden Innenhorn. Die Mantelfläche des Felgenbettes weist in Walzrichtung gesehen eine positive Steigung auf. Mithin vergrößert sich der Abstand der inneren Mantelfläche der Felge von der Rotationsachse des Rades in Walzrichtung. Dieses ist erforderlich, damit im Anschluss an den Walzvorgang das durch den Walzvorgang endkonturnah geformte Rad von dem Walzwiderlager abgenommen werden kann.

Damit auf einer solchen Kraftfahrzeugfelge ein Reifen montiert werden kann, muss die Felge einen Tiefbettabschnitt aufweisen. Dieser befindet sich benachbart zu dem dem Außenhorn der Felge zugeordneten Reifensitz. Somit grenzt an den dem Außenhorn zugeordneten Reifensitz eine in Richtung zur Nabe des Kraftfahrzeugrades vorspringende Schulter, um den Tiefbettabschnitt auszubilden. Diese in Richtung zur Nabe vorspringende Schulter ist von der Sichtseite des Kraftfahrzeugrades durch in die Schüssel eingebrachte Felgenöffnungen erkennbar. Durch diese Schulter und die zur Nabe weisende Außenseite des außenhornseitigen Reifensitzes ist ein nur schwer einer Reinigung zugänglicher Zwickel gebildet, in dem sich infolge dessen Verschmutzungen ansammeln, wie beispielsweise der Abrieb von den Bremsklötzen einer Scheibenbremse. Überdies wäre es wünschenswert, wenn die Designfreiheiten für ein solches Kraftfahrzeugrad nicht durch das notwendige Vorhandensein einer zur Ausbildung des Tiefbettes vorgesehenen Schulter an vorbeschriebener Position eingeschränkt wäre.

Ein Kraftfahrzeugrad mit den Merkmalen des Oberbegriffs des Anspruchs 1 ist aus EP 0807539 A1 bekannt. Ferner sind derartige Kraftfahrzeugräder bekannt aus US 2008/190534 A1, FR 2 781 184 A1, EP 1 522 427 A2 und WO 2005/005171 A1.

Ausgehend von diesem diskutierten Stand der Technik liegt der Erfindung daher die Aufgabe zugrunde, ein eingangs genanntes Kraftfahrzeugrad dergestalt weiterzubilden, dass vor allem hinsichtlich des sichtseitigen Erscheinungsbildes eines solchen Kraftfahrzeugrades weniger designerische Beschränkungen hingenommen werden müssen.

Gelöst wird diese Aufgabe erfindungsgemäß durch ein Kraftfahrzeugrad mit den Merkmalen des Anspruchs 1.

Bei einem solchermaßen konzipierten Kraftfahrzeugrad befindet sich der für eine Reifenmontage notwendige Tiefbettabschnitt benachbart zu dem dem Innenhorn zugeordneten Reifensitz und damit beabstandet von der Schüssel. Überdies besteht bei dieser Ausgestaltung die Möglichkeit, den bei herkömmlichen Kraftfahrzeugrädern in Richtung zur Schüssel weisenden Vorsprung in Richtung zum Innenhorn und somit zum Chassis weisend anzuordnen. Das Felgenbett zwischen dem Tiefbettabschnitt und dem dem Außenhorn zugeordneten Reifensitz wird mit einer negativen Neigung, beispielsweise einer kontinuierlichen negativen Neigungausgeführt. Folglich werden bei einem solchen Kraftfahrzeugrad die Schüsselöffnungen bzw. die Durchsicht durch diese nicht durch einen bei vorbekannten Kraftfahrzeugrädern notwendigerweise vorhandenen Vorsprung beeinträchtigt. Dieses erlaubt ein höheres Maß an Gestaltungsfreiheit. Darüber hinaus kann ein solches Kraftfahrzeugrad ausgeführt sein, dass die zur Rotationsachse bzw. zur Nabe weisende innere Mantelfläche der Felge keine Vorsprünge aufweist, deren Hinterschnitt zu einer Verschmutzung neigen würden.

Das Felgenbett ist im Querschnitt asymmetrisch, wobei der Tiefbettabschnitt des Felgenbettes das Tiefste darstellt und sich das Felgenbett ausgehend von dem dem Außenhorn zugeordneten Reifensitz in Richtung zu diesem Tiefsten des Tiefbettabschnittes mit einheitlichem oder annähernd einheitlichem Neigungswinkel vertieft, mithin das Felgenbett in diesem Bereich eine negative Neigung aufweist. Gleichermaßen ist es möglich, das Felgenbett ausgehend von dem dem Außenhorn zugeordneten Reifensitz auch ohne Neigung oder mit geringer positiver Neigung zu gestalten, um dann anschließend mit einem Abschnitt stärkerer negativer Neigung den Tiefbettabschnitt auszubilden. Ein solcher Abschnitt befindet sich bei diesem Kraftfahrzeugrad von der Rückseite der Schüssel mit einem deutlichen Abstand beabstandet und zudem typischerweise im Schatten des Felgenbettes, so dass ein solcher Abschnitt negativer Neigung selbst mit einem größeren Neigungswinkel durch die Schüsselöffnungen nicht oder so gut wie nicht erkennbar ist.

Zum Herstellen eines solchen Kraftfahrzeugrades wird vorgeschlagen, dass das Felgenbett mit wenigstens einem Abschnitt negativer Neigung im Wege eines Walzprozesses umfassend folgende Schritte hergestellt wird:
- Bereitstellen einer Widerlageroberfläche mit dem wenigstens einem Abschnitt negativer Neigung,
- Ansetzen eines Walzrohlings an die Widerlageroberfläche,
- Auswalzen des Rohlings über die Widerlageroberfläche für die Ausbildung der Felgenbettes einschließlich des Einwalzens in den Widerlageroberflächenabschnitt mit negativer Neigung,
- Abrücken der Widerlageroberfläche von dem ausgewalzten Felgenbett in demjenigen Abschnitt, in dem mit negativer Neigung gewalzt worden ist, und zwar so weit, dass das gewalzte Felgenbett von dem Walzwiderlager entformt ist und
- Abnehmen des gewalzten Kraftfahrzeugrades von dem Walzwiderlager.

Im Zusammenhang mit diesen Ausführungen ist mit der Begriff "negative Neigung", sich beziehend auf den Walzprozess bzw. den im Zuge des Walzprozesses ausgewalzten Körper, derart zu verstehen, dass der Abstand der inneren Mantelfläche des Felgenbettes in Walzrichtung und damit in axialer Richtung des Kraftfahrzeugrades zumindest abschnittsweise ausgehend von der Schüssel des Kraftfahrzeugrades über einen Abschnitt gegenüber der Rotationsachse verringert ist.

Bei diesem Verfahren wird zum Herstellen eines Ringkörpers mit zumindest einem Abschnitt negativer Neigung ein Walzverfahren durchgeführt, um einen Walzrohling endkonturnah auszuformen. Dieses beinhaltet auch die Ausformung des bzw. der Abschnitte mit negativer Neigung, also einer Neigung, die in Walzrichtung weist und in der der Innendurchmesser des Rades sich in Walzrichtung verringert. Möglich wird die Durchführung dieses Walzverfahrens dadurch, dass zum Entformen des ausgewalzten und in die Abschnitte eingewalzten Ringkörpers die Widerlageroberfläche von den ausgewalzten Ringkörpern zumindest jedenfalls in denjenigen Abschnitten, die mit negativer Neigung gewalzt worden sind, entfernt bzw. beabstandet wird. Das Wegfahren (Abrücken) der Widerlageroberfläche von diesen ausgewalzten Abschnitten erfolgt so weit, dass der gewalzte Ringkörper von dem Walzwiderlager entgegen der Walzrichtung entformt werden kann.

Mit dem vorbeschriebenen Verfahren können Felgen endkonturgenau oder endkonturnah mit negativer Neigung gewalzt werden. Dieses ermöglicht das Herstellen eines solchen Kraftfahrzeugrades im Wege eines Walzprozesses mit einem gegenüber vorbekannten Kraftfahrzeugrädern in Richtung zum Innenhorn versetzten Tiefbettabschnitt.

Weitere Vorteile und Ausgestaltungen der Erfindung ergeben sich aus der nachfolgenden Beschreibung eines Ausführungsbeispieles unter Bezugnahme auf die beigefügten Figuren. Es zeigen:
- **Fig. 1:**: einen Halbschnitt durch ein Kraftfahrzeugrad mit einem Felgenbett mit negativer Neigung, hergestellt im Wege eines Walzprozesses, und
- **Fig. 2:**: das Kraftfahrzeugrad der Figur 1, in das zum Vergleich ein Felgenbett eines herkömmlichen Kraftfahrzeugrades eingezeichnet ist.

Ein Kraftfahrzeugrad 1, hergestellt aus einer Aluminiumlegierung, umfasst eine Nabe 2, eine Schüssel 3, deren radial äußerer Abschluss durch ein Außenhorn 4 gebildet ist, sowie eine Felge. Diese umfasst das Außenhorn 4 sowie ein sich von dem Außenhorn 4 von der Schüssel 3 wegerstreckendes Felgenbett 5. Dem Felgenbett 5 zugehörig ist ein dem Außenhorn 4 zugeordneter Reifensitz 6. Das Felgenbett 5 erstreckt sich bis zu einem den inneren Abschluss der Felge des Kraftfahrzeugrades 1 bildenden Innenhorn 7. An das Innenhorn 7 in Richtung zum Felgenbett 5 angrenzend, befindet sich der dem Innenhorn 7 zugeordnete Reifensitz 8. Die beiden Reifensitze 6, 8 sind jeweils in Richtung zu einem mittleren Abschnitt des Felgenbettes 5 hin durch einen in radialer Richtung nach außen abragenden, sogenannten Hump 9 bzw. 10 begrenzt.

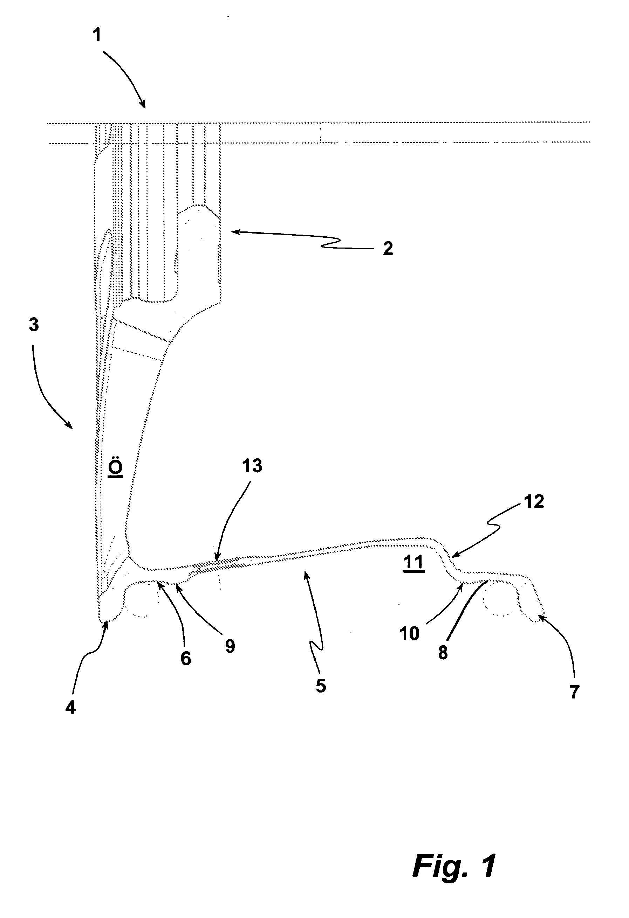

Das Felgenbett 5 verfügt über einen Tiefbettabschnitt 11, der für die Reifenmontage benötigt wird. Wie aus dem Teilquerschnitt des Kraftfahrzeugrades 1 der Figur 1 ersichtlich, ist das Felgenbett 5 asymmetrisch ausgeführt, wobei der Tiefbettabschnitt 11 benachbart zu dem dem Innenhorn 7 zugeordneten Reifensitz 8 angeordnet ist. Die Asymmetrie des Felgenbettes 5 zur Ausbildung des Tiefbettabschnittes 11 wird bei dem dargestellten Ausführungsbeispiel erreicht durch einen an den Reifensitz 8 des Innenhorns 7 bzw. den diesen begrenzenden Innenhump 10 angeformten Vorsprung 12 - einem Abschnitt mit positiver Neigung und großem Neigungswinkel sowie einem Abschnitt negativer Neigung, der sich ausgehend von dem dem Außenhorn 4 zugeordneten Reifensitz 6 bzw. den diesen begrenzenden Außenhump 9 bis zum Tiefbettabschnitt 11 erstreckt. In dem ersten, an den Außenhump 9 des Reifensitzes 6 grenzenden Abschnitt ist in das Felgenbett 5 eine Ventilbohrung 13 für die Montage eines Ventils eingebracht. Eingesetzt werden kann in die Ventilbohrung 13 ein Winkelventil für den Fall, dass es gewünscht sein sollte, die Ventilöffnung in die Ebene der Schüssel 3 hineinzuverlegen.

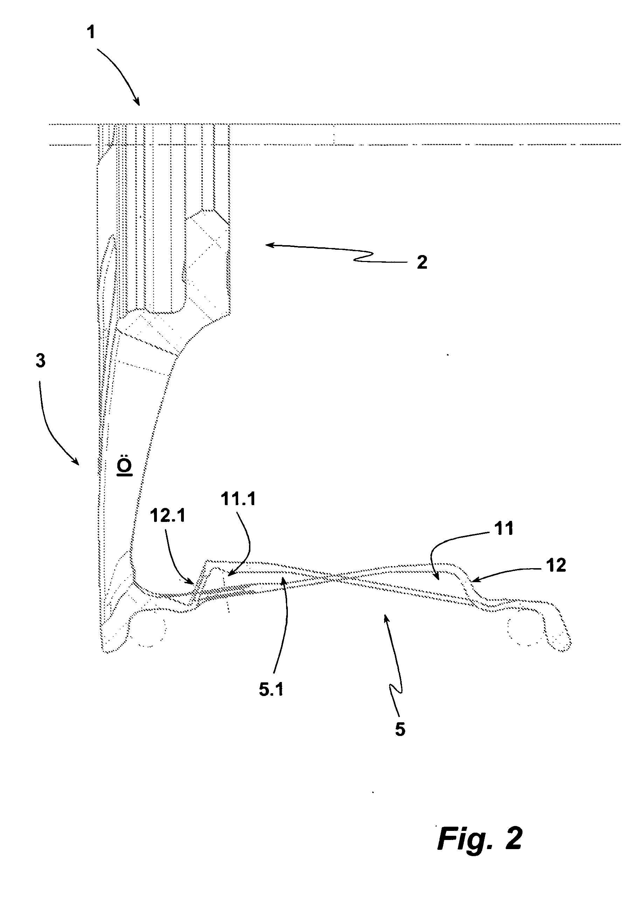

Figur 2 zeigt das Kraftfahrzeugrad 1 der Figur 1, über dessen Felgenbett 5 zum Vergleich mit einem herkömmlichen Kraftfahrzeugrad ein Felgenbett herkömmlicher Ausgestaltung gelegt ist. Dieses herkömmliche Felgenbett ist mit dem Bezugszeichen 5.1 und der Tiefbettabschnitt des herkömmlichen Felgenbettes 5.1 mit dem Bezugszeichen 11.1 gekennzeichnet. Aus dieser Gegenüberstellung ist deutlich zu erkennen, dass der innenseitig an die Schüssel 3 grenzende Bereich des Felgenbettes 5 ausgeführt ist, damit dieser keine Hinterschneidung für eine Ablagerung von Verschmutzungen im Unterschied zu dem Felgenbett 5.1 aufweist. Auch wird erkennbar, dass die designerischen Freiheiten zum Gestalten eines Kraftfahrzeugrades größer sind, wenn der Tiefbettabschnitt 11 benachbart zum Reifensitz 8 des Innenhornes 7 angeordnet ist. Zudem kann das optische Erscheinungsbild des Kraftfahrzeugrades 1 größer wirken, da der Vorsprung 12 innenliegend und nicht, wie bei dem herkömmlichen Felgenbett 5.1, außenliegend ist. Der Vorsprung ist mit dem Bezugszeichen 12.1 bei der herkömmlichen Felge 5.1 bezeichnet.

Aus der Beschreibung der Erfindung ergeben sich die damit erzielten Vorteile ohne Weiteres. Beschrieben ist lediglich ein Ausführungsbeispiel. Für einen Fachmann ergeben sich im Umfange der geltenden Ansprüche zahlreiche weitere Ausgestaltungen, ohne dass diese explizit dargelegt werden müssten. Somit kann anstelle eines geschmiedeten Radrohlings auch ein beispielsweise im Wege eines Gießprozesses hergestellter Rohling verwendet werden.

### Bezugszeichenliste

- 1: Kraftfahrzeugrad
- 2: Nabe
- 3: Schüssel
- 4: Außenhorn
- 5: Felgenbett
- 6: Reifensitz
- 7: Innenhorn
- 8: Reifensitz
- 9: Außenhump
- 10: Innenhump
- 11: Tiefbettabschnitt
- 12: Vorsprung
- 13: Ventilbohrung
- Ö: Öffnung

## Patentansprüche

1. Kraftfahrzeugrad mit einer ein Außenhorn (4), ein Innenhorn (7) und ein die beiden Hörner (4, 7) verbindendes Felgenbett (5) aufweisenden Felge zum Halten eines Reifens zwischen dem Außenhorn (4) und dem Innenhorn (7), welches Felgenbett (5) einen Tiefbettabschnitt (11) ausweist, wobei der Tiefbettabschnitt (11) oder zumindest ein Teil desselben benachbart zu dem dem Innenhorn (7) zugeordneten Reifensitz (8) angeordnet ist **dadurch gekennzeichnet, dass** das Felgenbett (5) im Querschnitt asymmetrisch ist, wobei der Tiefbettabschnitt (11) das Tiefste des Felgenbettes (5) darstellt, wobei sich das Felgenbett (5) ausgehend von dem dem Außenhorn (4) zugeordneten Reifensitz (6) in Richtung zum Tiefsten des Tiefbettabschnittes (11) vertieft.

2. Kraftfahrzeugrad nach Anspruch 1, **dadurch gekennzeichnet, dass** das Felgenbett (5) ausgehend von dem dem Außenhorn (4) zugeordneten Reifensitz (6) in Richtung zum Tiefsten des Tiefbettabschnittes (11) mit gleichem oder annähernd gleichem Neigungswinkel ausgeführt ist.

3. Kraftfahrzeugrad nach einem der Ansprüche 1 oder 2, **dadurch gekennzeichnet, dass** das Felgenbett (5) im Wege eines Walzprozesses hergestellt ist.

4. Kraftfahrzeugrad nach einem der Ansprüche 1 bis 3, **dadurch gekennzeichnet, dass** in das Felgenbett (5) eine Ventilöffnung (13) zum Befestigen eines Ventils eingebracht ist, welche Ventilöffnung (13) benachbart zu dem dem Außenhorn (4) zugeordneten Reifensitz (6) angeordnet ist.

5. Verfahren zum Herstellen eines Felgenbettes eines Kraftfahrzeugrades nach einem der Ansprüche 1 bis 4, **dadurch gekennzeichnet, dass** das Felgenbett mit wenigstens einem Abschnitt negativer Neigung im Wege eines Walzprozesses umfassend folgende Schritte hergestellt wird:
- Bereitstellen einer Widerlageroberfläche mit dem wenigstens einem Abschnitt negativer Neigung,
- Ansetzen eines Walzrohlings an die Widerlageroberfläche,
- Auswalzen des Rohlings über die Widerlageroberfläche für die Ausbildung der Felgenbettes einschließlich des Einwalzens in den Widerlageroberflächenabschnitt mit negativer Neigung,
- Abrücken der Widerlageroberfläche von dem ausgewalzten Felgenbett in demjenigen Abschnitt, in dem mit negativer Neigung gewalzt worden ist, und zwar so weit, dass das gewalzte Felgenbett von dem Walzwiderlager entformt ist und
- Abnehmen des gewalzten Kraftfahrzeugrades von dem Walzwiderlager

## Claims

1. Motor vehicle wheel comprising a rim having an outer flange (4), an inner flange (7) and a rim base (5) that connects the two flanges (4, 7), the rim being provided for retaining a tire between the outer flange (4) and the inner flange (7), which rim base (5) has a drop-base section (11), wherein the drop-base section (11) or at least a part thereof is arranged adjacent to the tire seat (8) associated with the inner flange (7), **characterized in that** the rim base (5) is asymmetrical in cross-section, wherein the drop-base section (11) represents the deepest part of the rim base (5), wherein the rim base (5), proceeding from the tire seat (6) associated with the outer flange (4), deepens in the direction of the deepest part of the drop-base section (11).

2. Motor vehicle wheel according to claim 1, **characterized in that** the rim base (5), proceeding from the tire seat (6) associated with the outer flange (4), is designed with a constant or approximately constant slope angle in the direction of the deepest part of the drop-base section (11).

3. Motor vehicle wheel according to any one of claims 1 or 2, **characterized in that** the rim base (5) is produced in the course of a rolling process.

4. Motor vehicle wheel according to any one of claims 1 to 3, **characterized in that** a valve opening (13) for attaching a valve is formed in the rim base (5), which valve opening (13) is arranged adjacent to the tire seat (6) associated with the outer flange (4).

5. Method for producing a rim base of a motor vehicle wheel according to any one of claims 1 to 4, **characterized in that** the rim base is produced with at least one section of negative slope in the course of a rolling process comprising the following steps:
- providing an abutment surface having the at least one section of negative slope,
- placing a rolling blank against the abutment surface,
- rolling out the blank over the abutment surface to form the rim base, including rolling into the abutment surface section having negative slope,
- moving the abutment surface away from the rolled-out rim base in the section that has been rolled at negative slope, namely so far that the rolled rim base is ejected from the rolling abutment, and
- removing the rolled motor vehicle wheel from the rolling abutment.

## Revendications

1. Roue de véhicule automobile avec une jante comportant un rebord de jante extérieur (4), un rebord de jante intérieur (7) et une base de jante (5) reliant les deux rebords (4, 7), destinée à maintenir un pneu entre le rebord de jante extérieur (4) et le rebord de jante intérieur (7), laquelle base de jante (5) présente un tronçon à base creuse (11), lequel tronçon à base creuse (11) ou au moins une partie de ce dernier est disposé à côté de l'assise de roue (8) affectée au rebord de jante intérieur (7), **caractérisée en ce que** la base de jante (5) est de section asymétrique, le tronçon de base creuse (11) constituant le creux de la base de jante (5), la base de jante (5) partant de l'assise de pneu (6) affectée au rebord de jante extérieur (4) s'approfondissant vers la zone la plus creuse du tronçon à base creuse (11).

2. Roue de véhicule automobile selon la revendication 1, **caractérisée en ce que** la base de jante (5) partant de l'assise de pneu (6) affectée au rebord de jante extérieur (4) en direction de la zone la plus creuse du tronçon à base creuse (11) est réalisée selon un angle d'inclinaison identique ou presque identique.

3. Roue de véhicule automobile selon l'une des revendications 1 ou 2, **caractérisée en ce que** la base de jante (5) est fabriquée dans le cadre d'un processus de laminage.

4. Roue de véhicule automobile selon l'une des revendications 1 à 3, **caractérisée en ce qu'**une ouverture de valve (13) est aménagée dans la base de jante (5) afin d'y fixer une valve, laquelle ouverture de valve (13) est placée à côté de l'assise de pneu (6) affectée au rebord de jante extérieur (4).

5. Procédé de production d'une base de jante d'une roue de véhicule automobile selon l'une des revendications 1 à 4, **caractérisé en ce que** la base de jante est fabriquée avec au moins un tronçon à inclinaison négative dans le cadre d'un processus de laminage comprenant les étapes suivantes:
- mise à disposition d'une surface de butée avec au moins un tronçon à inclinaison négative,
- mise en contact d'une ébauche à laminer contre la surface de butée,
- laminage de l'ébauche sur la surface de butée pour réaliser une base de jante y compris laminage dans le tronçon de la surface de butée à inclinaison négative,
- ripage de la surface de butée depuis la base de jante laminée vers le tronçon où le laminage a été réalisé avec une inclinaison négative et ce jusqu'au point où la base de jante laminée est déformée par la butée de laminage et
- enlèvement de la roue de véhicule automobile laminée de la butée de laminage.
